# EUROPÄISCHE PATENTANMELDUNG

(11) **EP 2 545 770 A2**
(43) Veröffentlichungstag der Anmeldung: **16.01.2013**
(21) Anmeldenummer: 12405063.4
(22) Anmeldetag: 13.07.2012
(51) Int. Cl.: A01K 13/00

(54) **Gamasche für Pferde**

(30) Priorität: 15.07.2011 EP 11405285
(71) Anmelder: Tiszarovits-Blickenstorfer, Monika, 8805 Richterswil (CH); Tiszarovits, Tibor, 8805 Richterswil (CH)
(72) Erfinder: Tiszarovits-Blickenstorfer, Monika, 8805 Richterswil (CH); Tiszarovits, Tibor, 8805 Richterswil (CH)
(74) Vertreter: Frei Patent Attorneys

(57) **Zusammenfassung**

Eine erfindungsgemässe Gamasche für Pferde weist ein Leuchtmittel mit mindestens einem lichtemittierenden Element - beispielsweise LED ― sowie eine Batterie zum Versorgen des Leuchtmittels mit elektrischer Energie auf.

## Beschreibung

Die Erfindung betrifft Ausrüstungen für den Reitsport. Im Speziellen betrifft sie eine Gamasche für Pferde.

Auf Strassen und Wegen sind Pferd und Reiter Verkehrsteilnehmer und müssen entsprechende Vorschriften beachten. So muss bei knappem oder fehlendem Tageslicht sowohl der Reiter als auch das Pferd ausreichend signalisiert sein. Das Pferd soll von vorne, hinten und von der Seite gut sichtbar sein.

Bisweilen wird dieser Pflicht nachgekommen indem sowohl der Reiter als auch das Pferd mit reflektierenden Bändern versehen werden. Es gibt hierfür die verschiedensten Ausführungsformen: reflektierende Bänder können an Zaumüberzügen, Fesselbändern, Gamaschen, Hufglocken, Halsbändern, Schweifband etc. angebracht werden.

Bei diesen Lösungen kommt es nicht selten dazu, dass die oben angeführten reflektierenden Bänder aufgrund von Schmutzablagerung und Abnutzung nicht lange leuchten/reflektieren und daher regelmässig ersetzt werden müssen. Je nach Ausführungsform und Unterlage (bspw. direkt auf dem Fell des Pferdes) können die mit reflektierenden Bändern ausgestatteten Gegenstände während des Ausritts verrutschen. Wenn die reflektierenden Bänder nur auf die entsprechenden Gegenstände (bspw. Fesselband, Schweifleuchtband) aufgeklebt und nicht genäht sind lösen sich diese mit der Zeit aufgrund von Nässe und Abnutzung ab. Ausserdem leuchten reflektierende Bänder nur so stark, wie sie selber angeleuchtet werden. Wenn sie gar nicht oder nur schwach angeleuchtet werden ist dies nicht ausreichend, um gesehen zu werden und um optimale Sicherheit sowohl für Pferd als auch für Reiter zu gewährleisten. Bänder aus phosphoreszierendem Material leuchten unter Umständen nicht genügend weit und man kann sie somit als nicht ausreichend zum Zweck der Signalisierung betrachten.

Aus der DE 20 2006 015 532 U ist eine Leuchtvorrichtung für den Pferdesport bekannt, welche für die Befestigung an einer Schutzvorrichtung (Gamasche) oder am Pferdegeschirr geeignet ist. Die Leuchtvorrichtung weist eine Mehrzahl von LEDs auf, die batteriebetrieben sind. Sie ist durch einen plattenartigen Aufbau vor Witterungseinflüssen geschützt: die LEDs sind auf einer Grundplatte angeordnet, auf welcher eine Zwischenplatte befestigt ist, welche ihrerseits Durchgangsbohrungen für die LEDs aufweist. Darauf ist eine lichtdurchlässige, wasserdichte Scheibe befestigt. Dieser Aufbau hat den Nachteil, dass er konstruktionsbedingt plattenartig ist und daher nur eine Richtung - insbesondere seitlich - abstrahlen kann, was unter Umständen nicht ausreicht. Ausserdem kann sich dieser Aufbau der Anatomie des Pferdes nicht anpassen und bei nicht geeigneter Polsterung Druckstellen verursachen.

Es ist Aufgabe der Erfindung, hier Abhilfe zu schaffen und ein Mittel für ein verlässlicheres sichtbar machen von Pferd und Reiter zu schaffen.

Diese Aufgabe wird erfindungsgemäss durch eine Gamasche für Pferde gelöst, welche ein Leuchtmittel mit mindestens einem lichtemittierenden Element - beispielsweise LED - sowie eine Batterie zum Versorgen des Leuchtmittels mit elektrischer Energie aufweist. Das Leuchtmittel ist mit einem rohr- oder schlauchartigen Schutzelement (Witterungsschutz) versehen, welches mehrere der lichtemittierenden Elemente - bspw. alle lichtemittierenden Elemente - gemeinsam umgibt, beispielsweise als Kunststoffröhre. Das Schutzelement kann flexibel sein, insbesondere aus einem mindestens teilweise transparenten Kunststoff.

Auch die Batterie kann sich innerhalb des Schutzelements befinden.

Gamaschen sind im Pferdesport heute üblich, da sie die empfindlichen Stellen des Pferdebeins schützen und bspw. bei Sprüngen die Verletzungsgefahr deutlich verringern. Gamaschen gehören daher oft zur Standardausrüstung im Reitsport. Sie sind sehr gut für die Platzierung der Leuchtmittel geeignet, da sie erstens oft ohnehin angezogen werden, zweitens in einer geeigneten Höhe über dem Boden sind und drittens die Bewegung der Pferdebeine mitmachen, was zu einer erhöhten Sichtbarkeit führt und mehr Aufmerksamkeit weckt.

Die erfindungsgemässe Gamasche kann ein Gamaschenteil aufweisen, das wie eine Gamasche der an sich bekannten Art ausgebildet ist und ein am Pferdebein für das Pferd möglichst angenehm anliegendes Gamaschen-Hauptteil, einen oder mehrere Befestigungsbändel oder ähnlich sowie ein Polster aufweisen. Das Gamaschen-Hauptteil und der/die Befestigungsbändel umgreifen zusammen das Pferdebein und können um dieses herum festgezurrt werden. Das Polster ist bspw. aussenseitig am Gamaschen-Hauptteil angebracht oder wird durch dieses gebildet und dient dem eigentlichen Schutzzweck. Das Leuchtmittel ist nun am Gamaschenteil, beispielsweise am Gamaschen-Hauptteil und/oder eventuell am Polster und/oder einem oder mehreren der Befestigungsbändel so befestigt, dass es auch dann nicht abfällt, wenn sich das Pferd beim Reitsport bewegt. Es kann bspw. mittels entsprechender Hilfsmittel am Gamaschenteil angenäht sein.

Die Batterie kann wiederaufladbar sein. Eine entsprechende Steckverbindung kann ggf. mit einer geeigneten Abdeckung versehbar sein und ggf. durch eine elektrische Leitung mit der im Innern des Schutzelements angeordneten Batterie verbunden sein.

Optional kann eine Schaltung vorgesehen sein, mittels welcher das Leuchtmittel automatisch aktiviert wird, wenn das Ladegerät nicht angehängt ist. Schaltungen, die diesen Anforderungen genügen, sind an sich bekannt, bspw. von Leuchten, die bei Stromausfall automatisch angehen. In diesen Ausführungsformen ist ein Schalter zum Ein- und Ausschalten des Leuchtmittels nicht nötig. In alternativen Ausführungsformen ist im Gegensatz dazu ein Schalter vorhanden, um das Leuchtmittel ein- und auszuschalten.

In dazu alternativen Ausführungsformen ist das Batteriefach wasserdicht abgeschlossen und mit dem Schutzelement Teil des Schutzelements. In diesem Fall kann das Batteriefach für die Aufnahme der Batterie mit dem die lichtemittierenden Elemente umgebenden, mindestens teilweise transparenten schlauchartigen Teil des Schutzelements verbunden sein. Bspw. kann das schlauchartige Element einer Partie des Batteriefachs übergestülpt und mit diesem verpresst und/oder wenn nötig verklebt sein.

Das Batteriefach kann auf die besonderen Erfordernisse abgestimmt sein, welche dadurch entstehen, dass sich die Batterie an einem von extremen Erschütterungen betroffenen Ort (dem Pferdebein) befindet. Insbesondere kann das Batteriefach Kontakte mit Kontaktfedern aufweisen, welche bezüglich einer BatterieEinschubachse durch die eingeschobene Batterie radial ausgelenkt werden. Das ermöglicht die Verwendung von Federn mit sehr grosser Federkonstante (d.h. von sehr harten Federn), welche die Batterie in einer Art Passsitz halten. Die Federn können bspw. aus einem Kontakt ausgestanzt und davon abgebogen sein, wobei der Kontakt dann bspw. aus einem verhältnismässig harten Material (Federstahl oder dergleichen) gefertigt ist.

Zusätzlich kann eine weichere, axiale Feder vorhanden sein und die Batterie gegen einen Anschlag drücken, um die Position ganz zu fixieren. Durch die kleinere Federkonstante der axialen Feder ist das Verschliessen des Batteriefachs mit normalem Kraftaufwand möglich.

Das Batteriefach weist insbesondere - wie an sich bekannt - einen Grundkörper und einen Deckel auf, wobei der Deckel am Grundkörper befestigbar, insbesondere anschraubbar ist. Zwischen Grundkörper und Deckel kann eine Dichtung vorhanden sein.

Das Leuchtmittel kann insbesondere so angeordnet sein, dass es, wenn die Gamasche angezogen ist, auf der Aussenseite des Pferdebeins zu liegen kommt. Wenn das Leuchtmittel entlang einer Längsrichtung ausgedehnt ist, kann es entlang der Längsachse der Pferdebeine, also in proximodistaler Richtung verlaufen.

Besonders günstig ist ein Verlauf des Leuchtmittels so, dass es am Pferdebein befestigt in einen möglichst grossen Raumwinkel strahlt. Dies kann insbesondere dadurch geschehen, dass das Leuchtmittel in zwei ungefähr parallelen Abschnitten verläuft, welche am Pferdebein befestigt seitlich vorne und seitlich hinten liegen und so die Abstrahlung auch nach vorne bzw. hinten ermöglichen. Beispielsweise kann das Leuchtmittel insgesamt U-förmig verlaufen, wobei die Schenkel des "U" die beiden ungefähr parallelen Abschnitte bilden.

Das Leuchtmittel kann insbesondere eine Mehrzahl von lichtemittierenden Elementen aufweisen, welche miteinander über ein Verbindungselement verbunden sind, welches auch die Stromversorgung (die Verbindung der einzelnen lichtemittierenden Elemente mit der Batterie) beinhaltet. Das Verbindungselement kann bspw. ein Flexprint sein. Als lichtemittierende Elemente sind bspw. LEDs bevorzugt, aufgrund des niedrigen Stromverbrauchs und der geringen für den Betrieb erforderlichen Spannung. Aber auch ein anderes elektrisch betriebenes Leuchtmittel ist denkbar, bspw. ein leuchtstoffröhrenartiges lichtemittierende Element oder eine Halogenleuchte etc..

Nachfolgend wird eine bevorzugte Ausführungsform der Erfindung anhand von Zeichnungen noch genauer beschrieben. In den Zeichnungen zeigen:
- Fig. 1 eine Ansicht eines linken und eines rechten Pferdebeins, je mit einer erfindungsgemässen Gamasche;
- Fig. 2 eine Ansicht einer Gamasche im ausgerollten Zustand;
- Fig. 3 eine Ansicht einer Gamasche gemäss einer alternativen Ausführungsform, ebenfalls im ausgerollten Zustand; und
- Fig. 4 eine Ansicht eines geschnitten dargestellten Batteriefachs, welches mit dem Schutzelement verbindbar ist.

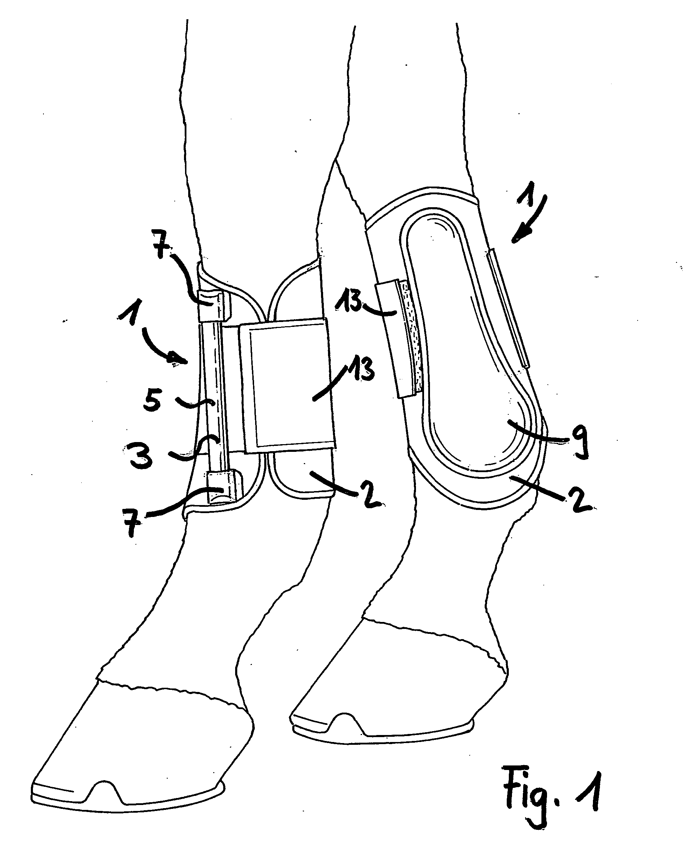

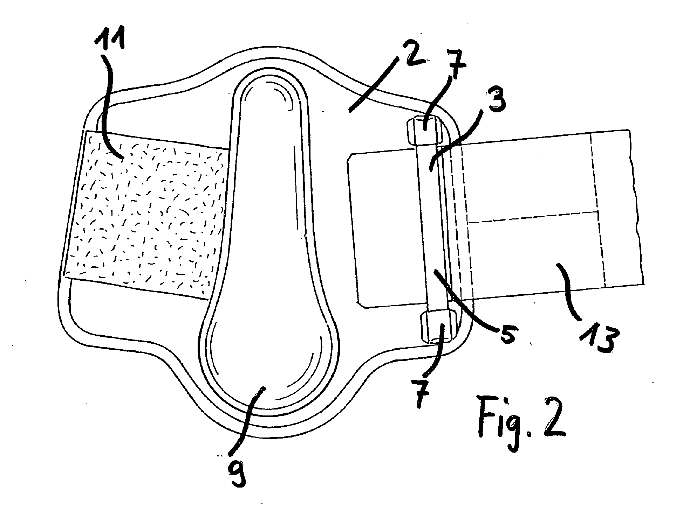

Das Pferd, von dem man in **Figur 1** nur die Vorderbeine vom Knie an abwärts sieht, trägt beidseitig je eine Gamasche 1, wie sie in **Figur 2** im ausgerollten Zustand von der Aussenseite her dargestellt sichtbar ist. Die Gamaschen 1 können von der an sich bekannten Art sein und ein Gamaschen-Hauptteil 2 und einen geeigneten Verschlussmechanismus - bspw. einen Klettverschluss - aufweisen. Aussenseitig an der Gamasche sieht man das Leuchtmittel 3. Dieses weist einen Witterungsschutz 5 (Schutzelement) in Form einer wasserdichten oder wasserabweisenden Röhre aus einem transparenten, optional transparent eingefärbtem Kunststoff auf.

Im Randbereich ist der Witterungsschutz durch eine geeignete Mantelpartie 7 gehalten. Die Mantelpartie ist am Gamaschen-Hauptteil 2 befestigt, bspw. mit diesem vernäht. Im Innern der Röhre ist einerseits mindestens eine Batterie angeordnet. Die Batterie kann sich beispielsweise unter der Mantelpartie im Innern des Witterungsschutzes befinden. Andererseits befinden sich dort mehrere LEDs, die in einer entlang des Witterungsschutzes verlaufenden Kette regelmässig angeordnet sind. Die LEDs sind auf einem Flexprint angeordnet, welcher gleichzeitig den Träger bildet und die LEDs elektrisch kontaktiert. Der Klettverschluss wird durch einen am Gamaschen-Hauptteil 2 flächig befestigte Befestigungsbändel 11 und ein mit einem unterseitig (in Bezug auf die in Fig. 2 dargestellte Orientierung) an einem Befestigungsbändel angebrachtes Widerhakenteil (oder umgekehrt) gebildet. In der dargestellten Ausführungsform verläuft der Befestigungsbändel 11 unter dem Leuchtmittel 3 hindurch.

Das Leuchtmittel ist so angebracht, dass es, wenn die Gamasche sachgerecht angezogen ist, aussenseitig verläuft. Innenseitig (in Bezug auf das Pferd) weisen die Gamaschen 1 je eine Polsterung 9 auf. Ein Leuchtmittel, welches dünner ist als dasjenige der hier beschriebenen Ausführungsform könnte auch um das Pferdebein herum verlaufen, also dieses mindestens teilweise umgreifen.

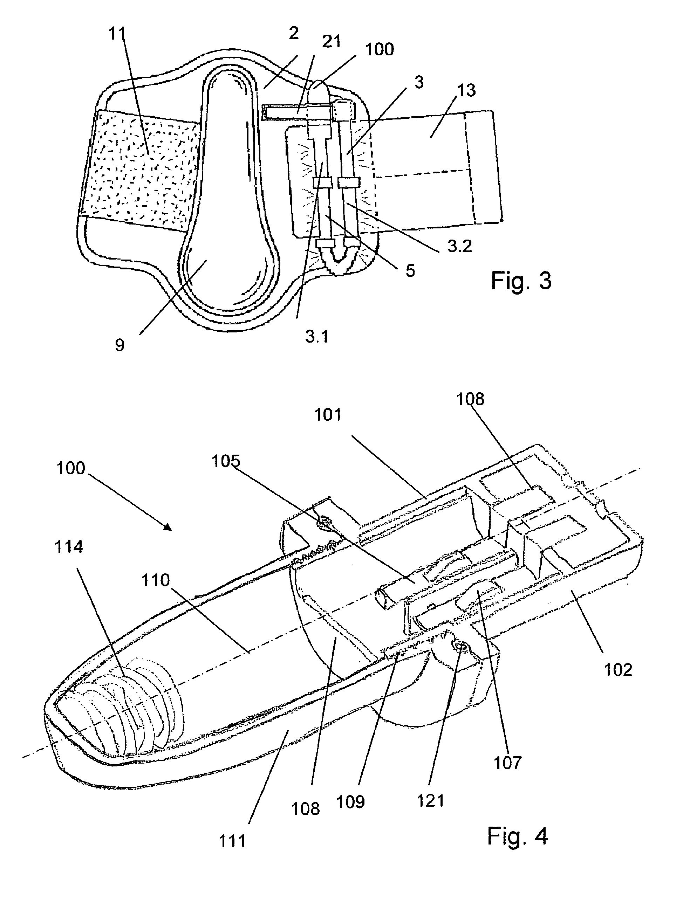

**Figur 3** zeigt eine Ausführungsform, in welcher das Leuchtmittel 3 zwei ungefähr parallele Abschnitte 3.1, 3.2 aufweist, die am Pferdebein seitlich vorne bzw. hinten zu liegen kommen und zusammen eine Abstrahlung in einen sehr grossen Raumwinkel bewirken. Die beiden Abschnitte werden durch einen insgesamt U-förmigen Verlauf des rohrartigen, flexiblen Witterungsschutzes mit darin verlegten lichtemittierenden Elementen gebildet.

Ebenfalls in Fig. 3 gut sichtbar ist das - mittels eine Befestigungslasche 21 befestigte - Batteriefach 100, welches wasserdicht mit dem mindestens teilweise (d.h. mindestens für einige Farben) transparenten, die lichtemittierenden Elemente umgebenenden Kunststoffschlauch oder Kunststoffrohr verbunden ist und mit diesem Zusammen den Witterungsschutz bildet.

Das Batteriefach 100 ist etwas detaillierter in **Figur 4** dargestellt. Das Batteriefach 100 weist ein Batterie-Grundgehäuse 101 und einen Deckel 111 auf. Im Grundgehäuse befestigt sind zwei elektrische Kontakte 105, welche in ihrer Position auf entsprechende Kontakte einer passenden Batterie angepasst sind. Die Kontakte weisen je eine - hier doppelt abgewinkelte - Flexprint- oder Leiterkontaktpartie 108 auf, an welchem ein zu den Leuchtmittel führender elektrischer Leiter kontaktierend befestigt, bspw. angelötet ist. Wie in den vorstehend beschriebenen Ausführungsformen kann der Leiter als Leiterader (Draht oder Litzenleiter) oder als Leiterbahn eines Leiterbahnträgers ausgebildet sein. Die Kontakte 105 weisen weiterhin Kontaktfedern 107 auf, welche entgegen einer Federkraft radial - in der gezeichneten Anordnung nach unten -verschiebbar ist.

Das hier dargestellte Batteriefach ist zur Aufnahme einer flachen, auf einem Steg 108, den Kontaktfedern und anderen Führungsmitteln des Grundgehäuses aufliegenden (und durch ein Gegenstück der in der Darstellung gemäss Fig. 7 nicht sichtbaren anderen ("oberen") Gehäusehälfte geführten) Batterie ausgebildet.

Der Deckel 111 ist auf das Batterie-Grundgehäuse 101 aufschraubbar (Aussengewinde 109 des Grundkörpers mit Innengewinde des Deckels zusammenwirkend), wobei eine Endpartie des Deckels gegen eine elastische Dichtung 121 gedrückt wird, so dass das Innere des aus Grundgehäuse und Deckel gebildeten Batteriefachs hermetisch abgedichtet wird. Wenn im Batteriefach eine Batterie vorhanden ist, drückt eine im Deckel befestigte axiale (bezüglich einer Batterieeinschubachse 110) Feder 114 diese gegen einen definierten Anschlag. Im Unterschied zu konventionellen Batteriekontaktsystemen weist das Batteriefach eine Federung mit Doppelfunktion auf: die axiale Feder 114 sorgt für eine definierte axiale Position, drückt die Batterie jedoch nicht gegen die Kontakte. Die Kontaktfedern 107 wirken in eine radiale Richtung und sorgen für einen verlässlichen Kontakt. Diese Kombination ist besonders vorteilhaft im Zusammenhang mit den beträchtlichen mechanischen Erschütterungen, die durch die Platzierung der Vorrichtung an einem Pferdebein zu erwarten sind. Als axiale Feder 114 kann eine gängige Feder mit mittelgrosser Federkonstante verwendet werden, wodurch sich das Batteriefach mit moderatem Kraftaufwand verschliessen lässt. Die radial wirkenden Kontaktfedern können eine grosse Federkonstante aufweisen und so die Batterie in einer Art Passsitz halten, wodurch auch bei sehr grossen Erschütterungen der elektrische Kontakt stets gewährleistet ist.

Das Grundgehäuse weist eine zylindrische Partie 102 auf, welche in ihrem Aussendurchmesser auf den Witterungsschutz der Leuchtmittel abgestimmt ist. Der Witterungsschutz ist bevorzugt fest mit der zylindrischen Partie verbunden, so dass das verschlossene Batteriefach zusammen mit dem Witterungsschutz gemeinsam abgedichtet wird und einen unter Umständen unterteilten Innenraum bildet, und zwar auch dann, wenn Durchführungen für die Leiter zwischen Batteriefach und Leuchtmitteln nicht dicht sind.

Das schlauch- oder röhrenartige, den Witterungsschutz des Leuchtmittels bildende Element kann bspw. durch Kleben, Verpressen oder Schrumpfen oder ähnlich an der zylindrischen Partie befestigt werden. Das Batteriefach kann zum Auswechseln oder Aufladen der Batterie hervorgenommen und aufgeschraubt werden. Zum Aufladen der Batterie kann hier ein Ladegerät handelsüblicher Art verwendet werden, wobei die Verwendung eines Ladegeräts mit den vorstehend diskutierten Merkmalen auch nicht ausgeschlossen ist

Anstelle eines Flexprints können die LEDs auch mit anderen Mitteln verbunden sein, bspw. durch ein Paar von isolierten Leiteradern, die wahlweise parallel, miteinander verdrillt oder mit einer gemeinsamen Hülle zu einem Kabel zusammengefasst sind.

Das Leuchtmittel kann optional weitere Mittel aufweisen, bspw. eine Schaltung, die ein ein-/ausschalten durch den Benutzer und/oder optional auch einen Blinkbetrieb ermöglichen kann. Auch ein Timer kann optional vorhanden sein; Kombinationen mit mechanischen Sensoren (bspw. einem Akzelerometer, welches das Leuchtmittel in Bewegung einschaltet, wenn es bewegt wird, etc.) sind möglich.

Die Batterie muss nicht notwendigerweise im Witterungsschutz vorhanden sein, sondern kann bspw. auch im Hauptteil der Gamasche eingenäht oder sonst wie platziert sein.

## Patentansprüche

1. An einem Pferdebein, insbesondere an einem Röhrenbein, befestigbare, dieses umgreifende Gamasche (1), aufweisend ein Leuchtmittel (3) mit mehreren elektrisch betreibbaren lichtemittierenden Elementen und einem Batteriefach oder einer Batterie zur Versorgung des Leuchtmittels mit elektrischem Strom,

2. Gamasche nach Anspruch 1 mit mehreren lichtemittierenden Elementen **gekennzeichnet durch** ein rohr- oder schlauchartiges, wasserdichtes, mindestens teilweise transparentes Schutzelement (5), welches mehrere der lichtemittierenden Elemente gemeinsam umgibt.

3. Gamasche nach Anspruch 2, **dadurch gekennzeichnet, dass** das Schutzelement eine (5) Kunststoffröhre oder ein Kunststoffschlauch ist.

4. Gamasche nach einem der vorangehenden Ansprüche, **dadurch gekennzeichnet, dass** die Batterie wiederaufladbar ist.

5. Gamasche nach Anspruch 4, **dadurch gekennzeichnet, dass** das Leuchtmittel (3) eine Schaltung aufweist, die das mindestens ene lichtemittierende Element aktiviert, sobald das Leuchtmittel an keinem Ladegerät angeschlossen ist.

6. Gamasche nach einem der vorangehenden Ansprüche, **dadurch gekennzeichnet, dass** das Leuchtmittel entlang der Längsachse des Pferdebeins ausgedehnt ist und aussenseitig verläuft.

7. Gamasche nach Anspruch 6, **dadurch gekennzeichnet, dass** das Leuchtmittel zwei ungefähr parallele Abschnitte (3.1, 3.2) aufweist, welche am Pferdebein befestigt seitlich vorne und seitlich hinten liegen.

8. Gamasche nach Anspruch 7, **dadurch gekennzeichnet, dass** das Leuchtmittel U-förmig verläuft und die beiden Schenkel des "U" die beiden ungefähr parallelen Abschnitte bildet.

9. Gamasche nach einem der vorangehenden Ansprüche, **dadurch gekennzeichnet, dass** das lichtemittierende Element bzw. die lichtemittierenden Element eine LED ist bzw. LEDs sind.

10. Gamasche nach einem der vorangehenden Ansprüche, **dadurch gekennzeichnet, dass** ein die Batterie aufnehmendes Batteriefach (100) mit dem Schutzelement (5) verbunden ist, derart, dass ein gemeinsamer, wasserdicht abgeschlossener Witterungsschutz für Batterie und lichtemittierende Elemente gebildet wird.

11. Gamasche nach einem der vorangehenden Ansprüche mit einem Batteriefach, **dadurch gekennzeichnet, dass** das Batteriefach Kontakte (105) zum Kontaktieren von Batteriekontakten aufweist, wobei die Kontakte (105) Kontaktfedern (107) aufweisen, welche entgegen einer Federkraft in - in Bezug auf eine Batterieeinschubachse (110) - radialer Richtung auslenkbar sind.

12. Gamasche nach Anspruch 11, **dadurch gekennzeichnet, dass** das Batteriefach zusätzlich eine axiale Feder (114) aufweist, durch welche die Batterie gegen einen Anschlag gedrückt wird.

13. Gamasche nach Anspruch 12, **dadurch gekennzeichnet, dass** die Federkonstante der Kontaktfedern (107) grösser ist als die Federkonstante der axialen Feder (114).

14. Gamasche nach einem der Ansprüche 10-13, **dadurch gekennzeichnet, dass** das Batteriefach ein Batteriefach-Grundgehäuse (101) und einen am Batteriefach befestigbaren Deckel (111) aufweist, wobei zwischen dem Grundgehäuse und dem Deckel eine elastische Dichtung (121) vorhanden ist.
